# EUROPEAN PATENT APPLICATION

(11) **EP 2 124 085 A1**
(43) Date of publication of application: **25.11.2009**
(21) Application number: 08711002.9
(22) Date of filing: 08.02.2008
(51) Int. Cl.: G02B 21/06

(54) **SLIT-SCANNING CONFOCAL MICROSCOPE**

(30) Priority: 14.02.2007 JP 2007033397
(71) Applicant: Nikon Corporation, Chiyoda-ku Tokyo 100-8331 (JP)
(72) Inventor: UJIKE, Tomoko, Tokyo 100-8331 (JP)
(74) Representative: Wiedemann, Peter
(86) International application number: PCT/JP2008/052123
(87) International publication number: WO 2008/099778

(57) **Abstract**

A slit-scanning confocal microscope is provided with a slit-like light source (1); an illuminating optical system (2) for forming the image of the light source (1) on a sample (3); and an imaging optical system (4), which forms an image on line sensor (5) arranged at a position optically conjugated to the light source (1) by reflection light, transmitted light or fluorescence from the sample (3). The slit-like light source (1) is divided into unit light sources, each of which has a size optically conjugated to a pixel of the line sensor (5).

## Description

### TECHNICAL FIELD

The present invention relates to a slit-scanning confocal microscope.

### BACKGROUND ART

In a commonly-used slit-scanning confocal microscope, light emitted from a light source passes through a first slit, an image of the first slit is used as scanning light through a scanning optical system, and the image of the first slit is formed on a sample using an objective lens. Then, reflected light or fluorescent light from the sample inversely passes through the objective lens and scanning optical system to convert the reflected light or fluorescent light into non-scanning light. The reflected light or fluorescent light passes through a second slit disposed in a position optically conjugated with the first slit, and intensity of the light having passed through the second slit is measured by a detector (line sensor) to obtain image data. A galvano mirror and the like are used in the scanning optical system to perform one-dimensional scanning in a direction normal to a slit length direction. It is not always necessary to provide the scanning optical system. Alternatively, the scanning may be performed by moving the integrally arranged light source, illumination optical system, image optical system, slits and the like.

Detailed description of a laser confocal scanning microscope is given in "Chapter 5, Light Pencil, written by Tadao Tsuruta, New Technology Communications, p177 to p205" (Non-Patent Document 1). In the slit-scanning confocal microscope, a pinhole used in the laser confocal scanning microscope is replaced by a slit.
Non-Patent Document 1: Chapter 5, Light Pencil, written by Tadao Tsuruta, New Technology Communications, p177 to p205

In a confocal microscope, the sample is scanned using a pinhole-like light source, and only the light having passed through the pinhole disposed in a position conjugated with the light source is detected. Therefore, the confocal microscope has high resolving power in a sample depth direction. However, a long time is required for the measurement because of two-dimensional scanning.

The slit is used in the slit-scanning confocal microscope, while the point light source is used in usual laser confocal scanning microscopes. Therefore, although the measurement time is shortened, there is a problem that the slit-scanning confocal microscope has lower resolving power (resolution) in the sample depth direction. The present invention has been made in view of the above-described circumstances, and a problem to be solved by the invention is to provide a slit-scanning confocal microscope that can enhance the resolving power in the sample depth direction.

### DISCLOSURE OF THE INVENTION

In first means, provided in order to solve the problem, a slit-scanning confocal microscope includes a slit-like light source; an illumination optical system that forms an image of the light source on a sample; and an image optical system that forms an image of reflected light, transmitted light, or fluorescent light from the sample on a line sensor, the line sensor being disposed in a position optically conjugated with the light source, wherein the light source is divided into unit light sources, and the unit light source having a size that is optically conjugated with each pixel of the line sensor.

Second means, provided in order to solve the problem, is an embodiment of the first means in which the light source is controlled such that the unit light sources are discretely lit.

Third means, provided in order to solve the problem, is an embodiment of the second means in which the light source is controlled such that the unit light sources adjacent to a lit unit light source are turned off.

Fourth means, provided in order to solve the problem, is an embodiment of the second or third means in which the light source is controlled such that lit unit light sources and turned-off unit light sources are arranged alternately.

Fifth means, provided in order to solve the problem, is an embodiment of any the second to fourth means in which a signal operation unit is provided, in which, assuming that Sa is an output signal obtained from a pixel in the line sensor when a unit light source being conjugated with the pixel is lit, and assuming that Sb is an output signal obtained from the pixel in the line sensor when the unit light source being conjugated with the pixel has been turned off and the unit light sources on the both sides of the turned off unit light source are lit, a difference output signal (Sa-Sb) is used as a corrected output signal of the output signal Sa of the pixel in the line sensor.

### BRIEF DESCRIPTION OF THE DRAWINGS

Fig. 1(a) is a schematic diagram illustrating the principle of a slit-scanning confocal microscope according to an embodiment of the invention, and Fig. 1(b) is a view illustrating an array of unit light sources and a line sensor;
Fig. 2 is a view illustrating irradiation by some of the unit light sources of the slit-like light source;
Fig. 3 is a view illustrating a region of a sample irradiated with one unit light source;
Fig. 4 is a view illustrating a region of a sample whose information is obtained from a pixel of the line sensor in lighting a unit light source adjacent to the unit light source conjugated with the pixel; and
Fig. 5 is a view illustrating regions of a sample whose information is obtained from output signals.

### EXPLANATION OF REFERENCE NUMERALS

- 1:: Slit-like light source
- 2:: Illumination optical system
- 3:: Sample
- 4:: Image optical system
- 5:: Line sensor
- SA,SB1, SB2, SB3, and SB4:: Unit light source
- D0,D1, D2, D3, and D4:: Pixel

### BEST MODE FOR CARRYING OUT THE INVENTION

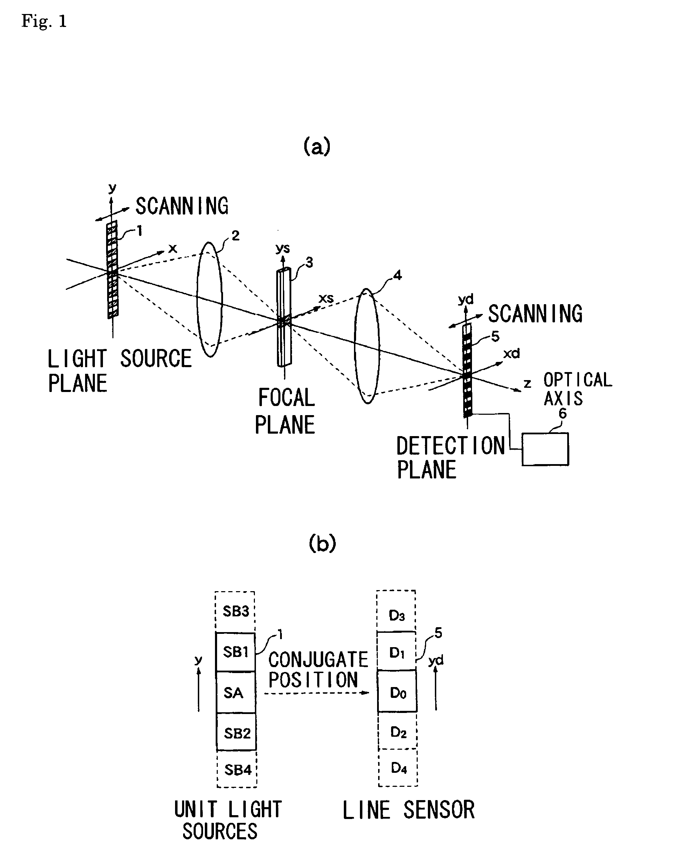

An embodiment of the present invention will be described below with reference to the drawings. Fig. 1(a) is a schematic diagram illustrating the principle of a slit-scanning confocal microscope according to an embodiment of the invention. In Fig. 1(a), an optical axis direction is set to a z-axis, a slit length direction of a slit-like light source 1 is set to a y-axis, and a slit width direction is set to an x-axis.

A light source plane in which the slit-like light source 1 (may be used as a secondary light source) is located is conjugated with an image plane on a sample 3. Therefore, an illumination optical system 2 makes an image of the slit-like light source 1 on the image plane (xs-ys plane) on sample 3 using the light emitted from the slit-like light source 1, thereby generating fluorescent light, reflected light, or transmitted light (transmitted light is illustrated in Fig. 1(a) by way of example) from a irradiated region of the sample 3. An image optical system 4 forms an image of the fluorescent light, reflected light, or transmitted light (transmitted light is illustrated in Fig. 1(a) by way of example) generated from the sample 3 on a line sensor 5 (xd-yd plane) that is of a line sensor.
A signal operation unit 6 processes an output signal supplied from the line sensor 5.

A position of the line sensor 5 is conjugated with the slit-like light source 1. A detection plane in which the line sensor 5 is located is conjugated with the image plane. Therefore, the light generated from image plane (xs-ys plane) on the sample 3 is focused on the line sensor 5 (xd-yd plane). The sample 3 is scanned in the optical axis direction and the xs-direction such that signals can be obtained from the whole of the target sample region. Alternatively, the slit-like light source 1 may be moved in the x-axis direction and the line sensor 5 may be moved in the xd-axis direction while the conjugate relationship is always kept between the slit-like light source 1 and the line sensor 5.

Fig. 1(b) is a view illustrating a positional relationship between the slit-like light source 1 and pixels of the line sensor 5. The slit-like light source 1 is divided into unit light sources, and each unit light source has a size that is optically conjugated with each pixel of the line sensor 5 through the illumination optical system 2 and image optical system 4. Fig. 1(b) illustrates a state in which a unit light source SA of the slit-like light source 1 is conjugated with a pixel D0 of the line sensor 5. Similarly, a unit light source SB1 is conjugated with a pixel D1, a unit light source SB2 is conjugated with a pixel D2, a unit light source SB3 is conjugated with a pixel D3, and a unit light source SB4 is conjugated with a pixel D4. Thus, the slit-like light source 1 is composed of the unit light sources conjugated with the pixels of the line sensor 5.

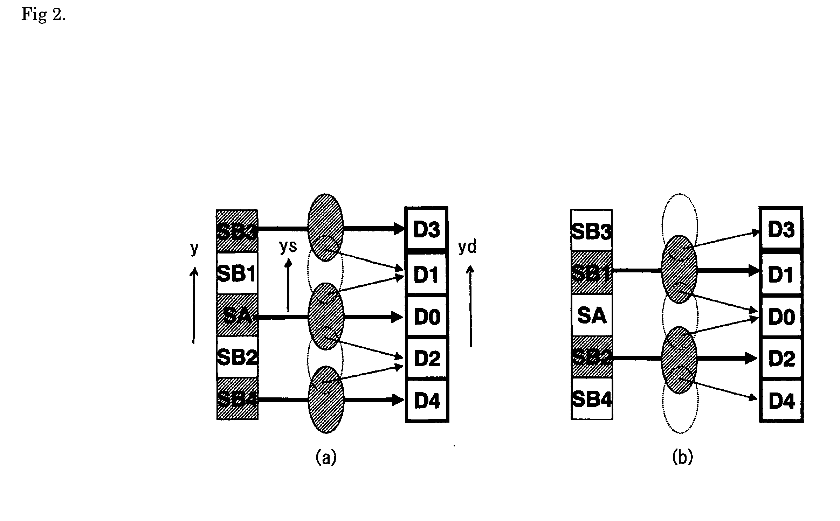

Fig. 2 illustrates irradiation by some of the unit light sources of the slit-like light source. The way of indicating the slit-like light source and the pixels is similar to that of Fig. 1. In Fig. 2, the hatched unit light sources are lit. That is, in Fig. 2(a), unit light sources SA, SB3, and SB4 are lit with the light sources between them turned off. Unit light sources SB1 and SB2 adjacent to the lit unit light source SA are turned off. A control unit (not illustrated) controls the lighting and turning-off of the unit light source. A region on the sample, expressed by a hatched ellipsoid of Fig. 2, can be detected by a pixel conjugated with a lit unit light source. A region on the sample, expressed by a broken-line ellipsoid of Fig. 2, shows an area which can be detected by a pixel conjugated with a turned-off unit light source.

In Fig. 2(b), the unit light sources SB1 and SB2 are lit with the unit light source between them turned off. The unit light sources SA and SB3 adjacent to the lit unit light source SB1 are turned off, and the unit light sources SA and SB4 adjacent to the lit unit light source SB2 are turned off. Thus, the slit light source 1 is controlled so as to have the lighting state of Fig. 2(a) and the lighting state of Fig. 2(b). The sample 3 is scanned to obtain the output signal in each of the lighting state of Fig. 2(a) and the lighting state of Fig. 2(b). Alternatively, the sample 3 may be scanned in the x-axis direction to obtain the output signal by moving the slit-like light source 1.

A light traveling way will be described by taking the unit light source SA and the pixel D0 as example. In the lighting state of Fig. 2(a) in which the unit light source SA is lit, light from the illumination region having the corresponding hatched ellipsoid is incident to the pixel D0, and the light is partially incident to the pixels D1 and D2 adjacent to the pixel D0. That is, light in portions in which hatched ellipsoids and broken-line ellipsoids overlap with each other is incident to the pixels D1 and D2.

Similarly, in the lighting state of Fig. 2(b), parts of lights emitted from the unit light sources SB1 and SB2 (lights in portions in which hatched ellipsoids and broken-line ellipsoids overlap with each other) are incident to the pixels D0. This is because the light emitted from the unit light source is spread on the sample while the region that can be detected by the pixel D0 is spread on the sample. That is, the light received by the pixel D0 includes part of the light that is generated from the region except for the neighborhood of the image plane by the illumination of the unit light source SB1 and part of the light that is generated from the region except for the neighborhood of the image plane by the illumination of the unit light source SB2.

In the following description, it is assumed that Sa is an output signal supplied from the pixel D0 in the lighting state of Fig. 2(a), that is, when the unit light source SA is lit. The sample information expressed by the output signal Sa will be described below.

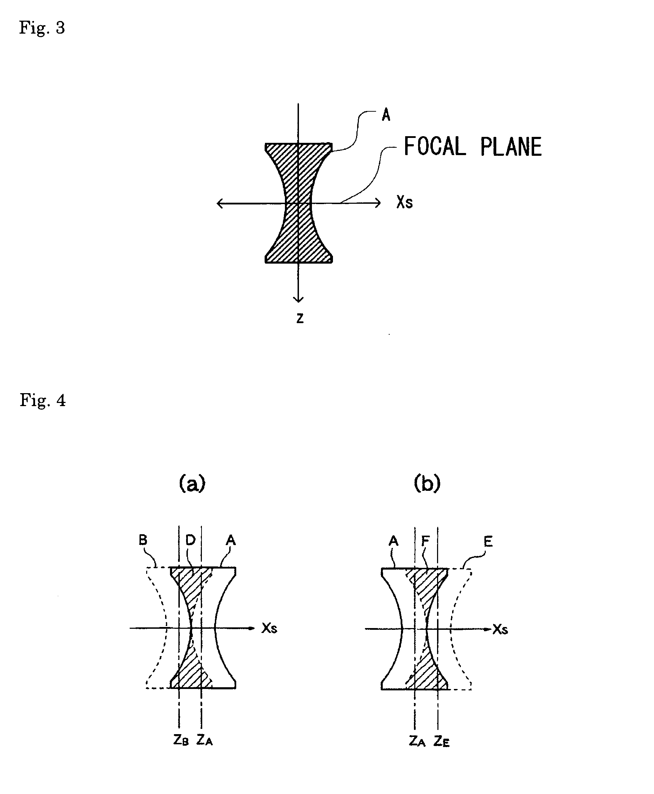

Fig. 3 is a view illustrating a region A in the sample irradiated with light emitted from the unit light source SA. The light from the region A is mainly received by the pixel D0 while partially received by the pixels D1 and D2.

The portion on an Xs-axis in the region A of Fig. 3 corresponds to the neighborhood of the image plane. Although the region A is maximally narrowed in the image plane (xs-ys plane) on the sample 3, the region A is also spread in the z-axis direction. As described above, because the pinhole is not used in the slit-scanning confocal microscope, the resolution is lower in the sample depth direction, and a sample information region included in the output signal Sa becomes a region that overlaps with the region A of the irradiated sample. The output signal Sa includes part of the light that generated from the region except for the neighborhood of the image plane in the sample by the unit light source SA (the position distant from the image plane in the optical axis direction).

Then, the unit light sources SB1 and SB2 adjacent to the unit light source SA are lit as illustrated in Fig. 2(b). At this point, it is assumed that Sb is an output signal of the light received by the pixel D0. The sample information region expressed by the output signal Sb will be described with reference to Fig. 4.

In Fig. 4(a), a region A (Z_{A} is a center axis in the z-axis direction) indicated by a solid line corresponds to the region A of Fig. 3, and a region B (Z_{B} is a center axis in the z-axis direction) indicated by a broken line corresponds to the region irradiated by the unit light source SB1. As illustrated in Fig. 4(a), the region A and the region B overlap with each other in a hatched region D.

Similarly, in Fig. 4(b), a region A indicated by the solid line corresponds to the region A of Fig. 3, and a region E (Z_{E} is a center axis in the z-axis direction) indicated by the broken line corresponds to the region irradiated by the unit light source SB2. As illustrated in Fig. 4(b), the region A and the region E overlap with each other in a hatched region F.

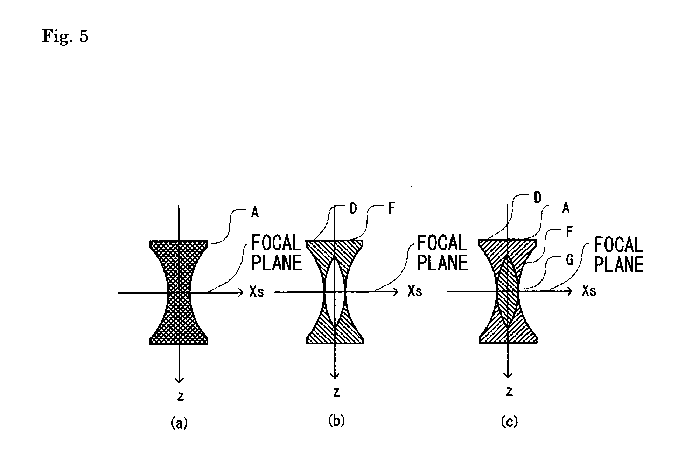

As described above, in the case of the lighting state of Fig. 2(b), lights from the overlapping region D and overlapping region F on the sample are detected by the pixel D0 to obtain the output signal Sb. That is, as illustrated in Fig. 5(b), the sample information region included in the output signal Sb becomes a combination of the region D and region F of Fig. 4. Further, the output signal Sb is considered to be substantially equivalent to part of the light that is included in the output signal Sa and generated from the region except for the neighborhood of the image plane by the irradiation of the unit light source SA.

Therefore, when a difference output signal (Sa-Sb) is obtained by operation, the difference output signal (Sa-Sb) includes information of a region G of Fig. 5(c), and the region G is narrowed in the z-direction compared with the region A of Fig. 5(a) that is of the sample information region obtained by lighting the unit light source SA. This means that the resolving power (resolution) in the sample depth direction is enhanced. Therefore, when the image is formed with the difference output signal as a corrected output signal of the pixel D0, the image having the higher resolution in the sample depth direction can be obtained.

First, as illustrated in Fig. 2(a), the above-described processing is performed while the unit light sources of the slit-like light source 1 are set such that lit ones and turned-off ones are arranged alternately. Then, as illustrated in Fig. 2(b), in the slit-like light source 1, the lit unit light sources are turned off, and the turned-off unit light sources are lit to perform the above-described processing. Then, when an image is formed by a combination of the output signals obtained in the two cases, the image having a higher resolution in the sample depth direction can be obtained.

In the above description, the unit light sources of the slit-like light source 1 are set such that lit ones and turned-off ones are arranged alternately. However, it is not always necessary to set the unit light sources of the slit-like light source 1 such that lit ones and turned-off ones are arranged alternately. For example, the unit light sources are discretely lit in any order, and the same effect is obtained when a difference output signal (Sa-Sb) is used as the corrected output signal of the output signal Sa of a pixel in a line sensor. Here, it is assumed that Sa is an output signal of a pixel in the line sensor that is conjugated with the lit unit light source and Sb is an output signal of the same pixel when unit light sources adjacent to the unit light source are lit.

In Fig. 1, the description of the scanning mechanism is omitted. The scanning mechanism is similar to that of the conventional slit-scanning confocal microscope, and the conventional scanning mechanism can directly be used in the invention.

## Claims

1. A slit-scanning confocal microscope comprising:
a slit-like light source;
an illumination optical system that forms an image of the light source on a sample; and
an image optical system that forms an image of reflected light, transmitted light, or fluorescent light from the sample on a line sensor, the line sensor being disposed in a position optically conjugated with the light source,
**characterized in that** the light source is divided into unit light sources, each unit light source having a size that is optically conjugated with each pixel of the line sensor.

2. The slit-scanning confocal microscope according to claim 1, wherein the light source is controlled such that the unit light sources are discretely lit.

3. The slit-scanning confocal microscope according to claim 2, wherein the light source is controlled such that the unit light sources adjacent to a lit unit light source are turned off.

4. The slit-scanning confocal microscope according to claim 2 or 3, wherein the light source is controlled such that lit unit light sources and turned-off unit light sources are arranged alternately.

5. The slit-scanning confocal microscope according to any one of claims 2 to 4, comprising a signal operation unit in which, assuming that Sa is an output signal obtained from a pixel in the line sensor when a unit light source being conjugated with the pixel is lit, and assuming that Sb is an output signal obtained from the pixel in the line sensor when the unit light source being conjugated with the pixel has been turned off and the unit light sources on the both sides of the turned off unit light source are lit, a difference output signal (Sa-Sb) is used as a corrected output signal of the output signal Sa of the pixel in the line sensor.
